# EUROPÄISCHE PATENTSCHRIFT

(11) **EP 1 231 582 B1**
(45) Veröffentlichungstag und Bekanntmachung des Hinweises auf die Patenterteilung: **20.08.2008**
(21) Anmeldenummer: 01127508.8
(22) Anmeldetag: 17.11.2001
(51) Int. Cl.: G09B 9/05, G09B 9/04, G09B 9/06, G01M 17/007, A63G 31/16

(54) **Fahrsimulator**
Driving simulator
Simulateur de conduite

(30) Priorität: 10.02.2001 DE 10106150
(43) Veröffentlichungstag der Anmeldung: 14.08.2002
(73) Patentinhaber: Bayerische Motoren Werke Aktiengesellschaft, 80809 München (DE)
(72) Erfinder: Donges, Edmund, Dr., 82256 Fürstenfeldbruck (DE)

(56) Entgegenhaltungen:
- EP-A- 0 992 967
- WO-A-99/13445
- DE-A- 2 842 409
- US-A- 4 251 140
- US-A- 4 473 355
- US-A- 4 998 594

## Beschreibung

Die Erfindung betrifft einen Fahrsimulator, insbesondere für die Simulation von Bewegungen bodengebundener Fahrzeuge. Zu den bodengebundenen Fahrzeugen sind Oberflächenfahrzeuge, wie Straßen- und Schienenfahrzeuge, Schiffe oder Flugzeuge auf einem Rollfeld zu rechnen. Besondere Ausführungsformen des Fahrsimulators können evtl. auch für die Simulation von Bewegungen von Luft- und Raumfahrzeugen verwendet werden.

Fahrsimulatoren sind seit langer Zeit bekannt. Beispielsweise wird besonders für Simulationen im Bereich der Luftfahrt ein "6-Bein-Bewegungssystem" verwendet, welches den Anforderungen in diesem Anwendungsbereich entgegenkommt. Für volldynamische Simulationen wird dieses 6-Bein Bewegungssystem um einen in x-und y-Richtung beweglichen Schlitten erweitert. Es hat sich jedoch herausgestellt, dass diese Bewegungssysteme für die Simulation von Bewegungen bodengebundener Fahrzeuge sehr komplex, schwergewichtig und kostenintensiv sind. Überdies lassen sich die bei bodengebundenen Fahrzeugen auftretenden Kräfte und Momente mit dieser Simulationsmethode nur mit einem enormen Energieeinsatz erzeugen.

Für die Erlebbarkeit fahrdynamischer Grenzbereichsmanöver ist die Darstellung von Beschleunigen durch ein Bewegungssystem eines Fahrsimulators von elementarer Bedeutung. Bei bodengebundenen Fahrzeugen verlangt die Abbildung von translatorischen Beschleunigungen im Simulationsbereich eine Veränderung gegenüber der realen Situation, weil translatorische Bewegungen aus der vergleichsweise "unendlichen Dimension des realen Straßennetzes" auf eine endliche Dimension einer Bewegungsfläche projiziert werden müssen. Die rotatorischen Freiheitsgrade der Bewegung hingegen lassen sich je nach gewähltem Konzept des Bewegungssystems im Unterschied zu den translatorischen Freiheitsgraden auch in einem mehr oder minder begrenzten Bewegungsraum vollständig in realer Größe abbilden.

Aufgabe der vorliegenden Erfindung ist die Bereitstellung eines Fahrsimulators, der den Besonderheiten von Bewegungen bodengebundener Fahrzeuge Rechnung trägt und eine besonders realistische Simulation gewährleistet.

Der erfinderische Ansatz liegt im wesentlichen darin, ein Objekt (selbstfahrende Trägereinheit), welches ein Fahrzeug oder eine Fahrzeugattrappe aufnehmen kann, in der erforderlichen Weise über eine im wesentlichen horizontale Bodenfläche zu bewegen. Als zweckmäßiger Ansatz für die Gestaltung der Bewegungsfläche bei einem erfindungsgemäßen Fahrsimulator wird eine ebene Fläche, insbesondere kreisförmig oder oval ausgebildet, angesehen, da im Automobilbereich der Kraftschluss zwischen Reifen und Fahrbahn in etwa gleich große Beschleunigungen in Fahrzeuglängs- und Querrichtung zulässt (Kamm'scher Reibungskreis). Die Erfindung unterscheidet sich im Wesentlichen gegenüber dem 6-Bein mit x- und y-Schlitten auch dadurch, dass zusätzliche Zentrifugalkräfte durch Kreisfahrten wesentlich einfacher genutzt werden können.

Eine Besonderheit des erfindungsgemäßen Fahrsimulatorkonzepts besteht darin, dass die bei Kreisfahrten der Trägereinheit (Trägerplattform) entstehenden Zentrifugalbeschleunigungen genutzt werden können, indem die Längsachse des jeweils auf der Trägereinheit stehenden Versuchsfahrzeugs (oder Fahrzeugattrappe) durch entsprechende Drehung der Trägereinheit auf den Kreismittelpunkt ausgerichtet wird.

Erfindungsgemäß wird die vorliegende Aufgabe durch die im Anspruch 1 angegebenen Merkmale gelöst. Im Unterschied zu dem oben angegebenen "6-Bein-Bewegungssystem" basiert das Konzept der vorliegenden Erfindung - wie vorgehend bereits angedeutet - auf dem Bewegungssystem eines autonom geführten Objektes, wobei der Sachverhalt berücksichtigt wird, dass sich die Kernbewegungen eines bodengebundenen Fahrzeugs in der Horizontale abspielen und die vertikale Dimension nur eine untergeordnete Rolle spielt.

Der vorliegende Fahrsimulator umfasst eine Trägereinheit mit einem steifen Boden in Form einer Pfanne (Bodenpfanne), auf dem - beispielsweise in dessen Mitte - ein Versuchsfahrzeug auf seinen eigenen Rädern oder eine Fahrzeugattrappe aufgestellt ist. Die Fahrzeugattrappe kann dabei als sogenanntes "Mock up", also als mechanische Fahrzeugnachbildung oder eine Sitzkiste, oder ein sogenanntes "Cave", also eine virtuelle dreidimensionale Repräsentationen des Fahrzeugs, ausgebildet sein. Die Trägereinheit weist überdies zumindest eine Projektionsfläche auf, auf die über zumindest einen Projektor ein Bild zu einer Fahrsimulation projiziert werden kann. Einen wesentlichen Teil der Trägereinheit stellen Bewegungsmodule dar, die eine Bewegung der Trägereinheit zumindest in der Horizontale erlauben. Jedes Bewegungsmodul, welches vorzugsweise an der Peripherie der Trägereinheit oder der Bodenpfanne angeordnet ist, besitzt ein auf einer Bodenfläche abrollendes Rad oder Zwillingsrad, welches sich bezüglich der Vertikalachse der Bodenfläche mittels eines ersten Antriebs lenken lässt. Ferner ist ein zweiter Antrieb zum Antreiben des Rades selbst in beiden Drehrichtungen angeordnet. Die autonom geführte Trägereinheit benötigt mindestens drei Bewegungsmodule. Aus Stabilitätsgründen kann es von Vorteil sein, wenn mindestens vier oder fünf Bewegungsmodule - vorzugsweise in äquidistantem Abstand voneinander - verwendet werden. Durch die unabhängige Führung der Räder bezüglich ihrer Lenkachse und bezüglich des Antriebs des Rades selbst lassen sich reine Vorwärts- und Rückwärtsbewegungen, reine Querbewegungen, reine Drehbewegungen sowie Kombinationen dieser Bewegungen erzeugen. Die Antriebe für die jeweiligen Räder sind vorzugsweise in den Radnaben angeordnet. Dies ermöglicht einen besonders kleinbauenden Antrieb. Über jedes Rad kann ein antreibendes und ein bremsendes Moment erzeugt werden. Je nach erforderlichem Bremsmoment kann die zusätzliche Anordnung einer Radbremse notwendig werden.

Die insbesondere kreisförmig ausgebildete Trägereinheit bildet zugleich ein ideales Gerüst für einen Projektionsauf- oder überbau. Gemäß einer Ausführungsform ist der Projektionsüberbau kugelförmig ausgeführt und besitzt auf dessen Innenseite zumindest eine Projektionsfläche. Die Projektionsfläche kann auch für eine 360°-Sichtsimulation ausgebildet sein. Dazu sind entsprechende Projektoren anzuordnen. Die Projektion kann bei geschlossenen Prüffahrzeugen auf einen horizontalen Ring der Halbkugelfläche begrenzt werden, der vorzugsweise so zu dimensionieren ist, dass aus der Augenposition eines Fahrers die gesamten Sichtfelder überdeckt werden. Für offene Fahrzeuge könnte eine Projektion im Sinne eines "Optimax"-Kinos verwendet werden. Die Projektoren können vorzugsweise im Projektionsüberbau, insbesondere im Bereich des Zenits des Projektionsüberbaus angeordnet werden. Denkbar ist auch eine Durchlichtprojektion, bei der die Projektoren außerhalb der halbkugelförmigen Projektionsfläche angeordnet werden und von außen auf eine halbtransparente Projektionshaut strahlen. Je nach Projektionsart sind verschiedene Anzahl und Anordnungen der Projektoren vorzusehen.

Eine Geräuschsimulation kann beispielsweise über eine Audio-Anlage eines Fahrzeugs selbst erfolgen. Zusätzlich können in der Trägereinheit, im Versuchsfahrzeug oder in der Fahrzeugattrappe weitere Audio-Anlagen angeordnet sein, um lokale Simulationen von Motor-, Roll- und Windgeräuschen in simulativer Weise einzuspielen.

Physikalische Größen, die nicht real vorliegen, können damit durch optische Eindrücke (Projektionsfläche), haptische Eindrücke (Vibrationen), und akustische Eindrücke (Geräuschsimulation) nachgebildet werden.

Wie oben bereits erwähnt, spielt sich die Hauptaktion bei bodengebundenen Fahrzeugen im horizontalen Bereich ab. Allerdings kommt es bei der Bewegung eines Fahrzeugs auf einer Straße auch zu Vertikalbewegungen, die durch Bodenunebenheiten oder durch Fahrdynamikänderungen hervorgerufen werden. Wird bei einer ersten Ausbaustufe des Fahrsimulators auf die Darstellung eines Hubfreiheitsgrades verzichtet, so kann bei einer weiteren Ausführungsform eine Implementierung einer Hubbewegung erfolgen. Dazu ist es möglich, in den einzelnen Bewegungsmodulen weitere Antriebe vorzusehen, die eine Vertikalbewegung der Bodenpfanne der Trägereinheit gegenüber der Bodenfläche ermöglichen. Diese können als hydraulische Linearzylinder oder als hydraulische oder elektrische Hubspindelantriebe konzipiert sein. Alternativ oder zusätzlich kann eine entsprechende Hub- oder Absenkvorrichtung auch in der Bodenpfanne der Trägereinheit selbst vorgesehen werden, beispielsweise an den Stellen, wo die Reifen des Versuchsfahrzeuges auf den Tragplatten der Bodenpfanne stehen. Bei der konstruktiven Ausgestaltung der jeweiligen Hubanordnung kann berücksichtigt werden, dass die Hubamplitude bei der Anwendung als Fahrsimulator eine Größenordnung von 1 m nicht überschreiten wird. Bei der Anwendung als Luft- oder Raumfahrtsimulator kann die Hubamplitude entsprechend größer gestaltet werden. Wird der Roll- und Nickfreiheitsgrad der Fahrzeugbewegungen in der ersten Alternative nur passiv realisiert, weil das auf der Bodenpfanne stehende Fahrzeug mit dem ihm eigenen Fahrwerk durch die angreifenden Beschleunigungskräfte auch Hub-, Wank- und Nickbewegungen produziert, so ist bei der zweiten Alternative über die zusätzliche Implementierung von Hubvorrichtungen eine aktive Wank- und Nickanregung möglich. Wichtig in diesem Zusammenhang ist, dass Wank- und Nickachse in Höhe des Innenohrs des Fahrers angeordnet werden, damit bei instationären Hub-, Wank- und Nickbewegungen keine falsch gerichteten Beschleunigungsinformationen an das Innenrohr geliefert werden.

In beiden Ausführungsformen ist eine Fesselung des Versuchsfahrzeuges erforderlich, um bei den angreifenden Beschleunigungskräften eine ungewollte Verschiebung des Versuchsfahrzeuges gegenüber der Bodenpfanne zu vermeiden. Diese Fesselung kann beispielsweise durch Haltebügel oder -bänder erfolgen, welche die vier Radfelgen mit den vier Aufstandsplatten der Bodenpfanne verbinden.

Diese Radaufstandsplatten müssen ihrerseits eine Längs- und Querverschiebung der Radaufstandsflächen in der Größenordnung von +/- 20mm erlauben, damit sich die Federbewegungen des fahrzeugeigenen Fahrwerks weitgehend ohne Verzwängung der Radaufhängung einstellen können. Die Aufstandsplatten für die vier Räder sind deshalb z.B. in Form von Rutschplatten oder pendelgestützten Platten auszuführen, die über nichtlineare Elastizitäten die Radaufstandsflächen immer dann in die Ausgangsposition zurückstellen, wenn ein kräftefreier Bewegungszustand oder Stillstand des Fahrsimulators eintritt.

Gemäss einer besonderen Ausführungsform fährt die Trägereinheit auf einer ebenen Bodenfläche eines Simulationsgebäudes ab, welches vorzugsweise von einer Decke, Kuppel oder Traglufthalle überspannt wird. Die ebene Bodenfläche kann dabei kreis- oder ovalförmig ausgebildet sein und zumindest bezüglich einer abfahrbaren Ausdehnung deutlich größer als die Abmessungen der Trägereinheit (z. B.ca. 8 m) gewählt werden. Die Ränder der ebenen Fläche können überdies durch Sicherheitseinrichtungen, wie Fangzäune oder Fangkissen, ergänzt werden, die eine Bewegung der Trägereinheit über die Bodenfläche hinaus verhindern.

Bei der konstruktiven Ausgestaltung des erfindungsgemäßen Fahrsimulators ist die Problematik zu lösen, wie die Trägereinheit mit Energie und Information für die verschiedenen Antriebe, Projektionen etc. versorgt wird. In einer Version kann dies autark geschehen, d. h. die Trägereinheit kann autark ausgebildet sein, wobei ein Energiegenerator (z.B. Verbrennungsmotor/Generator-Einheit) wie auch Rechnereinheiten in der Trägereinheit aufgenommen sind, die eine entsprechende Bewegung mit den zugehörigen Simulationseffekten erlauben. Alternativ ist es möglich, die Trägereinheiten von außen mit Information zu versorgen. Dies kann beispielsweise über eine Funkverbindung geschehen. Die Energieversorgung müsste dabei weiterhin von der Trägereinheit selbst übernommen werden. Eine andere Ausführungsform der Versorgung ist durch ein Verbindungskabel zwischen der Trägereinheit und einem Element einer äußeren Umgebung, beispielsweise dem Simulatorgebäude, gegeben, wobei über das Verbindungskabel sowohl eine Energie- als auch eine Informationsversorgung durchgeführt werden kann.

Die Energieversorgung für die Trägereinheit kann jedoch auch durch Stromabnehmer (ähnlich bei elektrischen Lokomotiven oder Stadtbussen) vorgenommen werden, die die elektrische Energie aus einem die Bewegungsfläche überspannenden Leitungsnetz über Schleifkontakte abgreifen und ggf. über die als Massepol ausgebildete Bodenfläche zurückleiten.

Ein Ausführungsbeispiel der vorliegenden Erfindung wird nachfolgend und mit Bezug auf die beiliegenden Zeichnungen näher erläutert. Die Zeichnungen zeigen in
- Fig. 1: eine schematische Perspektivansicht einer Ausführungsform einer erfindungsgemäßen Trägereinheit,
- Fig. 2: eine schematische Perspektivansicht einer in einem Simulationsgebäude aufgenommenen Trägereinheit gemäß Fig. 1 und
- Fig. 3: ein Blockdiagramm, welches den Simulationsvorgang näher erläutert.

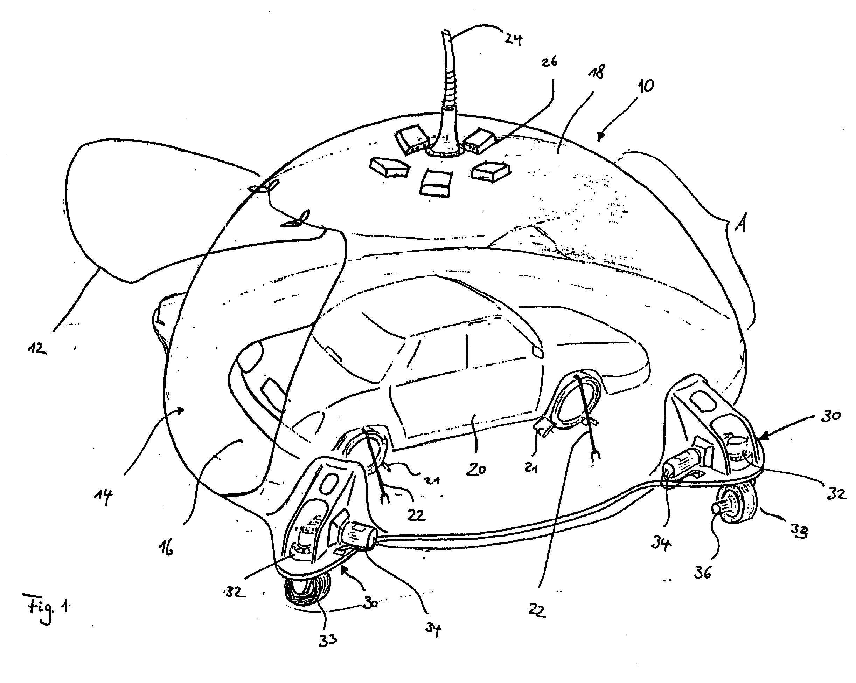

In Fig. 1 ist eine Trägereinheit 10 eines Fahrsimulators dargestellt, die eine Bodenpfanne 16 aufweist, über die sich eine in etwa halbkugelförmige Projektionsfläche 18 spannt. Die Projektionsfläche 18 weist an einer Seite eine mit einer Klappe 12 verschließbare Öffnung 14 auf, durch die ein Fahrzeug 20 in die Trägereinheit 10 eingebracht werden kann. Gemäß Fig. 1 ist das Fahrzeug 20 zentral auf der Bodenfläche 16 der Trägereinheit 10 platziert und wie weiter oben bereits beschrieben fixiert. Dabei sind Stützen 21 erkennbar, an bzw. zwischen denen die Räder des Fahrzeugs 20 abgestützt sind, sowie Haltebänder 22, mit denen die Räder des Fahrzeugs 20 gegen seitliches Verrutschen verspannt sind. Zusätzlich oder alternativ können auch an sich übliche Radaufstandsplatten vorgesehen sein.

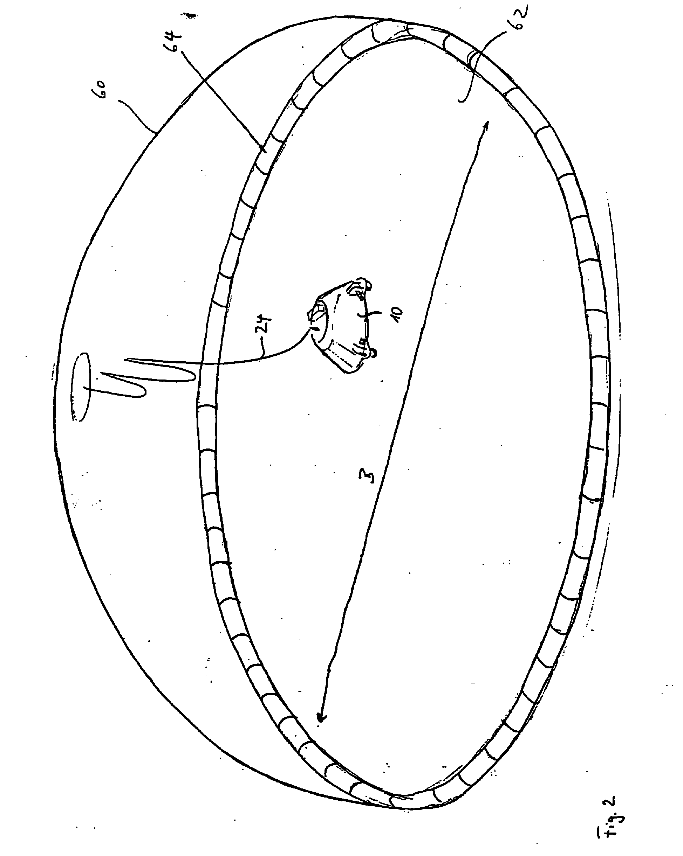

In gleichem Winkelabstand zueinander sind an der Peripherie der Trägereinheit 10 vier Bewegungsmodule 30 angeordnet. Jedes Bewegungsmodul 30 umfasst ein Rad 33, welches auf einer Bodenfläche 62 (siehe Fig. 2) abrollt und gegenüber einer Vertikalachse bezüglich der Bodenfläche lenkbar ist. Vorliegend lassen sich die Räder mittels eines jeweiligen ersten Antriebs 32 um die angegebene Vertikalachse in einem Bereich von +/- 90° drehen.

Im Bereich jeder Nabe eines Rades 33 ist jeweils ein zweiter elektromotorischer Antrieb 36 sowie eine Radbremse (nicht näher dargestellt) angeordnet, mit dem sich jedes Rad 33 bezüglich seiner Rollbewegung beaufschlagen, also beschleunigen, abbremsen oder konstant antreiben lässt. Bei der vorliegenden Ausführungsform sind zudem bei jedem Bewegungsmodul 30 noch weitere Antriebe 34 angeordnet, mit dem sich ein Rad vertikal aus- oder einfahren lässt, so dass die Bodenpfanne 16 der Trägereinheit 10 im Bereich des jeweiligen Bewegungsmoduls 30 anhebbar oder absenkbar ist. Durch die Ansteuerung der verschiedenen Antriebe der Bewegungsmodule lässt sich die Trägereinheit 10 vorwärts oder rückwärts geradeaus bewegen, nach links oder nach rechts bewegen, drehen (Gierwinkel links/rechts) sowie jede Kombination dieser Bewegungen herbeiführen. Zu der Koordination bedarf es natürlich einer Rechner- und Steuerungseinheit, die für einen Simulationswunsch die entsprechend abgestimmten Aktuatorbetriebe umsetzt und die vorgenannten Antriebe entsprechend ansteuert.

Die Kommunikation zwischen der Trägereinheit 10 und einem Simulationsrechner wird über ein Verbindungskabel 24 hergestellt, welches vom Zenit des den Boden überspannenden Projektionsüberbaus 18 zu einer externen Einheit führt. Über dieses Verbindungskabel 24 wird auch die Energieversorgung für die einzelnen Antriebe bereitgestellt. Innerhalb des Projektionsüberbaus 18 sind - in Fig. 1a angedeutet - fünf Projektoren 26 derart angeordnet, das im wesentlich eine 360°-Rundumsicht bildlich dargestellt werden kann. Dies Rundumsicht erfolgt auf einem etwa horizontal ausgebildeten Ring der Halbkugelfläche des Projektionsüberbaus 18 im Bereich A. Die Techniken hierfür sind bekannt, so dass nicht weiter darauf eingegangen werden muss.

Vorliegend nicht dargestellt ist eine Audioanlage der Trägereinheit, über die verschiedene Geräusche, wie Motor-, Roll- und Windgeräusche, in den Innenraum der Trägereinheit 10 eingespielt werden können. Ebenfalls nicht dargestellt sind Schwingungserreger, die an der Motor-Getriebeeinheit, am Abgasstrang und an den Fahrwerksbauteilen angeordnet werden können, um so beispielsweise die Vibration der Motor/Getriebeeinheit der Abgasanlage und des Fahrwerks nachbilden zu können.

Aus Fig. 2 kann das Konzept des autonom geführten Fahrzeugs entnommen werden. Die Trägereinheit 10 kann sich auf einer ebenen Bodenfläche 62 eines Simulatorgebäudes bewegen. Die ebene Bodenfläche 62 ist von einer Kuppel 60 überspannt, von deren Zenit ein Verbindungskabel 24 zur Trägereinheit 10 geführt ist. Die ebene Bodenfläche 62 ist vorliegend kreisrund gewählt mit einem Durchmesser von etwa 40 m. Radial ist die ebene Bodenfläche durch einen Sicherheitsbalg 64 begrenzt, der verhindert, dass die Trägereinheit 10 die Bodenfläche 62 verlässt.

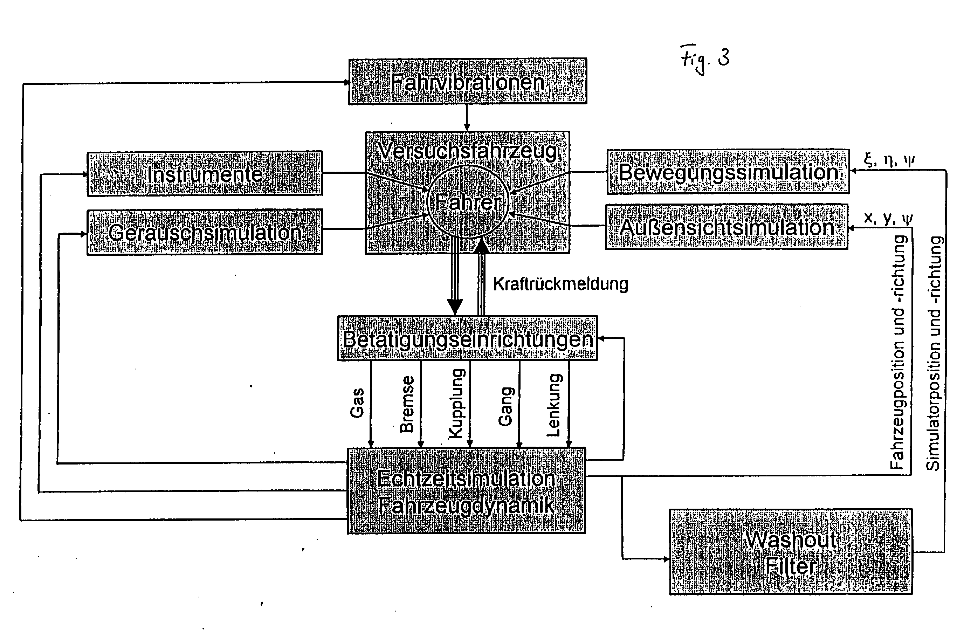

Um die Interaktion zwischen Fahrer und dem Fahrsimulator herzustellen, muss auch das Fahrzeug informationstechnisch mit der Trägereinheit gekoppelt sein. Den Ablauf der Simulation kann man aus Fig. 3 erkennen. Ein Fahrer im Versuchsfahrzeug bedient verschiedene Betätigungseinrichtungen, wie das Fahrpedal (Gas), die Bremse, die Kupplung, die Gangschaltung (Gang) und das Lenkrad (Lenkung). Diese Informationen werden über eine Verbindung Fahrzeug/Trägereinheit und das Verbindungskabel 24 an einen nicht dargestellten Rechner weitergeleitet. Dieser Rechner erzeugt die aufgrund der Fahreraktionen Befehle für die Antriebs-, Akustik-und Optikeinheiten. Zum einen werden in einem Graphikbereich die Signale für die Projektoren berechnet und über das Verbindungskabel 24 an die Projektoren weitergeleitet, so dass eine übereinstimmende Außensicht-Simulation gewährleistet ist. Über einen sog. "Washout-Filter" werden die realen Bewegungen eines echten Fahrzeuges auf die begrenzte Bewegungsfläche des Simulators umgerechnet und überdies im Rechner berechnete Größen für die Antriebe an die Trägereinheit abgegeben, so dass eine Bewegungssimulation der Trägereinheit und damit des darin aufgenommenen Fahrzeugs erfolgen kann. Ferner wird die oben erwähnte Audio-Anlage vom Rechner bedient, so dass zugehörige Geräuschsimulationen (beispielsweise Beschleunigung, Abbremsung, Windgeräusche) etc. eingespielt werden können. Um für den Fahrer eine tatsächliche Fahrt zu simulieren, müssen auch die Instrumente im Fahrzeug mit den vermittelten Fahrgefühl übereinstimmen. Dazu werden über die verschiedenen Verbindungen die Instrumente des Fahrzeugs in geeigneter Weise beaufschlagt. Zuletzt kommt es noch zu einer Betätigung der, wie oben erwähnt, vorzugsweisen Anordnung von Vibrationseinrichtungen an Fahrzeugteilen selbst, so dass die entsprechenden natürlichen Vibrationseffekte ebenfalls erzeugbar sind. Mit dieser Anordnung lassen sich alle wesentlichen Eindrücke, die für einen Fahrer beim Führen eines Fahrzeugs entscheidend sind, wiedergeben, so dass der Fahrer mit den verschiedenen Rückmeldungen versorgt wird. Je nach Abstimmung kann damit eine mehr oder weniger realistische Fahrsimulation sichergestellt werden. Kernpunkt ist jedoch die Trägereinheit, welche durch die besondere Ausgestaltung eine echtheitsnahe Beschleunigungsrückmeldung erlaubt.

## Patentansprüche

1. Fahrsimulator, insbesondere für die Simulation von Bewegungen bodengebundener Fahrzeuge und von Wasserfahrzeuge, mit einer Trägereinheit (10), die eine steife Bodenpfanne (16), auf der ein Versuchsfahrzeug (20) oder eine Versuchsattrappe aufstellbar ist, zumindest eine Projektionsfläche (A) und zumindest einen Projektor (26) aufweist, sowie zumindest drei Bewegungsmodule (30) umfasst, von denen jedes ein auf einer Bodenfläche (62) abrollendes Rad (31) besitzt, welches bezüglich der Vertikalachse zur Bodenfläche (62) mittels eines ersten Antriebs (32) lenkbar ist und welches über einen jeweils zugeordneten zweiten Antrieb (36) antreibbar ist.

2. Fahrsimulator nach Anspruch 1,
**dadurch gekennzeichnet,**
**dass** die Bodenpfanne (16) der Trägereinheit (10) möglichst steif ausgebildet ist.

3. Fahrsimulator nach Anspruch 1 oder 2,
**dadurch gekennzeichnet,**
**dass** vier oder fünf Bewegungsmodule (30) vorgesehen sind.

4. Fahrsimulator nach einem der Ansprüche 1 bis 3,
**dadurch gekennzeichnet,**
**dass** zusätzlich zu den zweiten Antrieben (36) bei zumindest einem Rad (31) eine Radbremse vorgesehen ist.

5. Fahrsimulator nach einem der vorhergehenden Ansprüche,
**dadurch gekennzeichnet,**
**dass** die Bewegungsmodule (30) an der Peripherie der Trägereinheit (10) oder der Bodenpfanne (16) angeordnet sind.

6. Fahrsimulator nach einem der vorhergehenden Ansprüche,
**dadurch gekennzeichnet,**
**dass** der Bereich des Lenkwinkels um die Vertikalachse im Bereich von +/-180°, insbesondere im Bereich von +/- 90 ° liegt.

7. Fahrsimulator nach einem der vorhergehenden Ansprüche,
**dadurch gekennzeichnet,**
**dass** die zweiten Antriebe zum Beschleunigen und Abbremsen des jeweiligen Rades in beiden Raddrehrichtungen ausgebildet sind.

8. Fahrsimulator nach einem der vorhergehenden Ansprüche,
**dadurch gekennzeichnet,**
**dass** der zweite Antrieb (36) für jedes Rad (36) in der Radnabe vorgesehen ist.

9. Fahrsimulator nach einem der vorhergehenden Ansprüche,
**dadurch gekennzeichnet,**
**dass** die Bodenpfanne (16) der Trägereinheit (10) im wesentlichen kreisförmig ausgebildet ist.

10. Fahrsimulator nach einem der vorhergehenden Ansprüche,
**dadurch gekennzeichnet,**
**dass** die Bodenpfanne (16) der Trägereinheit (10) von einem Projektionsüberbau (18) überspannt ist.

11. Fahrsimulator nach Anspruch 10,
**dadurch gekennzeichnet,**
**dass** der Projektionsüberbau (18) im wesentlichen halbkugelförmig ausgebildet ist.

12. Fahrsimulator nach Anspruch 10 oder 11,
**dadurch gekennzeichnet,**
**dass** mehrere Projektoren (26) vorgesehen, insbesondere im Projektionsüberbau (18) angeordnet sind.

13. Fahrsimulator nach einem der vorhergehenden Ansprüche 10 bis 12,
**dadurch gekennzeichnet,**
**dass** die Projektoren außerhalb der Projektionsfläche oder des Projektionsüberbaus angeordnet sind und die Projektion nach Art einer Durchlichtprojektion auf die Projektionsfläche aufbringbar ist.

14. Fahrsimulator nach einem der Ansprüche 10 bis 13,
**dadurch gekennzeichnet,**
**dass** die Projektoren (26) im wesentlichen im Zenit des Projektionsüberbaus (18) angeordnet sind.

15. Fahrsimulator nach einem der vorhergehenden Ansprüche,
**dadurch gekennzeichnet,**
**dass** die Projektoren (26) nach Anzahl und Anordnung derart gewählt sind, dass im wesentlichen eine 360° Projektion möglich ist.

16. Fahrsimulator nach einem der vorhergehenden Ansprüche,
**dadurch gekennzeichnet,**
**dass** eine Akustikanlage vorgesehen ist.

17. Fahrsimulator nach einem der vorhergehenden Ansprüche,
**dadurch gekennzeichnet,**
**dass** Befestigungsmittel für das Fahrzeug an beweglichen Aufstellplatten auf der Bodenpfanne (16) der Trägereinheit (10) vorgesehen sind.

18. Fahrsimulator nach einem der vorhergehenden Ansprüche,
**dadurch gekennzeichnet,**
**dass** die Bewegungsmodule (30) einen weiteren Antrieb (34) umfassen, mit dem das jeweilige Rad (31) bezüglich der Bodenpfanne (16), insbesondere in Vertikalrichtung, aus- oder eingefahren werden kann.

19. Fahrsimulator nach einem der vorhergehenden Ansprüche,
**dadurch gekennzeichnet,**
**dass** in oder an der Bodenpfanne (16) Vorrichtungen vorgesehen sind, mit denen sich die Räder des Fahrzeugs oder das Fahrzeug selbst anheben oder absenken lassen.

20. Fahrsimulator nach einem der vorhergehenden Ansprüche,
**dadurch gekennzeichnet,**
**dass** die Trägereinheit (10) in einem Simulatorgebäude aufgenommen ist, in dem sich die Trägereinheit (10) auf einer ebenen Bodenfläche (62) bewegen lässt.

21. Fahrsimulator nach Anspruch 20,
**dadurch gekennzeichnet,**
**dass** die ebene Bodenfläche (62) durch eine die Trägereinheit (10) in ihrer weiteren Bewegung außerhalb die Fläche behindernde Sicherheitseinrichtung (64) begrenzt ist.

22. Fahrsimulator nach einem der vorhergehenden Ansprüche 20 oder 21,
**dadurch gekennzeichnet,**
**dass** die ebene Bodenfläche (62) kreisförmig oder oval ausgebildet ist.

23. Fahrsimulator nach einem der Ansprüche 20 bis 22,
**dadurch gekennzeichnet,**
**dass** das Simulatorgebäude bezüglich seiner abfahrbahren Ausdehnung in zumindest einer Richtung deutlich größer als die Trägereinheit ist.

24. Fahrsimulator nach einem der Ansprüche 20 bis 23,
**dadurch gekennzeichnet,**
**dass** eine Kommunikationseinrichtung (24) zwischen dem Simulatorgebäude und der Trägereinheit (10) vorgesehen ist.

25. Fahrsimulator nach einem der Ansprüche 20 bis 24,
**dadurch gekennzeichnet,**
**dass** das Simulatorgebäude eine Decke oder eine Kuppel (60) aufweist, von der ein die Kommunikation und/oder die Energieversorgung ermöglichendes Verbindungskabel (24) zu der Trägereinheit (10) geführt ist.

## Claims

1. A driving simulator, more especially for the simulation of movements of landbased vehicles and watercraft, with a carrier unit (10), which has a rigid base pan (16), on which a test vehicle (20) or a test dummy can be set up, at least one projection surface (A) and at least one projector (26), and comprises at least three movement modules (30), of which each has a wheel (31) rolling on a base surface (62), which wheel can be steered by means of a first drive with respect to the vertical axis to the base surface (62) and which can be driven by means of a respectively associated second drive (36).

2. A driving simulator according to claim 1, **characterised in that** the base pan (16) of the carrier unit (10) is as rigid as possible.

3. A driving simulator according to claim 1 or 2, **characterised in that** four or five movement modules (30) are provided.

4. A driving simulator according to any one of claims 1 to 3, **characterised in that** in addition to the second drives (36) a wheel brake is provided in at least one wheel (31).

5. A driving simulator according to any one of the preceding claims, **characterised in that** the movement modules (30) are arranged on the periphery of the carrier unit (10) or the base pan (16).

6. A driving simulator according to any one of the preceding claims, **characterised in that** the range of the steering angle about the vertical axis is in the range of +/- 180°, more especially in the range of +/- 90°.

7. A driving simulator according to any one of the preceding claims, **characterised in that** the second drives are configured to accelerate and decelerate the respective wheel in the two directions of rotation of the wheel.

8. A driving simulator according to any one of the preceding claims, **characterised in that** the second drive (36) for each wheel (36) is provided in the wheel hub.

9. A driving simulator according to any one of the preceding claims, **characterised in that** the base pan (16) of the carrier unit (10) is substantially circular

10. A driving simulator according to any one of the preceding claims, **characterised in that** the base pan (16) of the carrier unit (10) is spanned by a projection superstructure (18).

11. A diving simulator according to claim 10, **characterised in that** the projection superstructure (18) is substantially hemispherical.

12. A driving simulator according to claim 10 or 11, **characterised in that** a plurality of projectors (26) are provided, more especially arranged in the projection superstructure (18).

13. A driving simulator according to any one of the preceding claims 10 to 12, **characterised in that** the projectors are arranged outside the projection surface or the projection superstructure and the projection can be provided in the manner of a rear projection on the projection surface.

14. A driving simulator according to any one of claims 10 to 13, **characterised in that** the projectors (26) are arranged substantially in the zenith of the projection superstructure (18).

15. A driving simulator according to any one of the preceding claims, **characterised in that** the projectors (26) are selected according to number and arrangement in such a way that a 360° projection is substantially possible.

16. A driving simulator according to any one of the preceding claims, **characterised in that** an acoustic system is provided.

17. A driving simulator according to any one of the preceding claims, **characterised in that** fastening means are provided for the vehicle on movable erection plates on the base pan (16) of the carrier unit (10).

18. A driving simulator according to any one of the preceding claims, **characterised in that** the movement modules (30) comprise a further drive (34), with which the respective wheel (31) can be extended or retracted with respect to the base pan (16), more especially in the vertical direction.

19. A driving simulator according to any one of the preceding claims, **characterised in that** devices are provided in or on the base pan (16), with which devices the wheels of the vehicle or the vehicle itself can be lifted or lowered.

20. A driving simulator according to any one of the preceding claims, **characterised in that** the carrier unit (10) is received in a simulator building, in which the carrier unit (10) can be moved on a level base surface (62).

21. A driving simulator according to claim 20, **characterised in that** the level base surface (62) is limited by a safety mechanism (64) preventing the carrier unit (10) from further movement outside the surface.

22. A driving simulator according to either of claims 20 or 21, **characterised in that** the level base surface (62) is circular or oval.

23. A driving simulator according to any one of claims 20 to 22, **characterised in that** the simulator building is significantly larger than the carrier unit with respect to its travelable extent in at least one direction.

24. A driving simulator according to any one of claims 20 to 23, **characterised in that** a communication mechanism (24) is provided between the simulator building and the carrier unit (10).

25. A driving simulator according to any one of claims 20 to 24, **characterised in that** the simulator building has a cover or a dome (60), from which a connecting cable (24) allowing communication and/or the supply of energy is guided to the carrier unit (10).

## Revendications

1. Simulateur de conduite, notamment pour simuler les mouvements de véhicules terrestres ou de véhicules aquatiques, comportant une unité de support (10) ayant une cuvette de sol (16), rigide, sur laquelle se place un véhicule d'essai (20) ou un véhicule factice, au moins une surface de projection (A) et au moins un projecteur (26), ainsi qu'au moins trois modules de mouvement (30), chacun de ces modules ayant une roue (31) roulant sur la surface (62) du sol, et qui se guide par rapport à l'axe vertical à la surface du sol (62) à l'aide d'un premier moyen d'entraînement (32) et se déplace par un second moyen d'entraînement (36) respectif.

2. Simulateur de conduite selon la revendication 1,
**caractérisé en ce que**
la cuvette de sol (16) de l'unité de support (10) est aussi rigide que possible.

3. Simulateur de conduite selon la revendication 1 ou 2,
**caractérisé par**
quatre ou cinq modules de mouvement (30).

4. Simulateur de conduite selon l'une des revendications 1 à 3,
**caractérisé en ce qu'**
au moins une roue (31) comporte un frein de roue en plus des seconds moyens d'entraînement (36).

5. Simulateur de conduite selon l'une des revendications précédentes,
**caractérisé en ce que**
les modules de mouvement (30) sont prévus à la périphérie de l'unité de support (10) ou de la cuvette de sol (16) .

6. Simulateur de conduite selon l'une des revendications précédentes,
**caractérisé en ce que**
la plage de l'angle de direction autour de l'axe vertical est comprise entre +/- 180°, notamment cet angle se situe dans une plage de +/- 90°.

7. Simulateur de conduite selon l'une des revendications précédentes,
**caractérisé en ce que**
les seconds moyens d'entraînement sont conçus pour accélérer ou freiner la roue respective dans les deux sens de rotation de la roue.

8. Simulateur de conduite selon l'une des revendications précédentes,
**caractérisé en ce que**
le second moyen d'entraînement (36) est prévu dans le moyeu de chaque roue (36).

9. Simulateur de conduite selon l'une des revendications précédentes,
**caractérisé en ce que**
la cuvette de sol (16) de l'unité de support (10) a une forme pratiquement circulaire.

10. Simulateur de conduite selon l'une des revendications précédentes,
**caractérisé en ce que**
la cuvette de sol (16) de l'unité de support (10) est couverte par une superstructure (18) de projection.

11. Simulateur de conduite selon la revendication 10,
**caractérisé en ce que**
la superstructure de projection (18) a pratiquement une forme hémisphérique.

12. Simulateur de conduite selon la revendication 10 ou 11,
**caractérisé par**
plusieurs projecteurs (26), notamment dans la superstructure de projection (18).

13. Simulateur de conduite selon l'une des revendications 10 à 12,
**caractérisé en ce que**
les projecteurs sont installés à l'extérieur de la surface de projection ou de la superstructure de projection et la projection se fait comme une projection par transparence sur la surface de projection.

14. Simulateur de conduite selon l'une des revendications 10 à 13,
**caractérisé en ce que**
les projecteurs (26) sont installés pratiquement au zénith de la super structure de projection (18).

15. Simulateur de conduite selon l'une des revendications précédentes,
**caractérisé en ce que**
le nombre et la disposition des projecteurs (26) sont choisis pour permettre une projection pratiquement sur 360°.

16. Simulateur de conduite selon l'une des revendications précédentes,
**caractérisé par**
une installation acoustique.

17. Simulateur de conduite selon l'une des revendications précédentes,
**caractérisé par**
des moyens de fixation du véhicule sur des plaques d'appui mobiles sur la cuvette de sol (16) de l'unité de support (10) .

18. Simulateur de conduite selon l'une des revendications précédentes,
**caractérisé en ce que**
le module de mouvement (30) comporte un autre moyen d'entraînement (34) pour déployer ou rentrer la roue (31) respective, par rapport à la cuvette de sol (16), notamment dans la direction verticale.

19. Simulateur de conduite selon l'une des revendications précédentes,
**caractérisé par**
des dispositifs prévus dans ou sur la cuvette de sol (16) permettant de relever ou d'abaisser les roues du véhicule ou le véhicule même.

20. Simulateur de conduite selon l'une des revendications précédentes,
**caractérisé en ce que**
l'unité de support (10) est logée dans un bâtiment du simulateur dans lequel l'unité de support (10) peut se déplacer sur une surface de sol (62) plane.

21. Simulateur de conduite selon la revendication 20,
**caractérisé en ce que**
la surface de sol plane (62) est délimitée par une installation de sécurité (64) qui interdit à l'unité de support (10) de poursuivre son déplacement au-delà de la surface.

22. Simulateur de conduite selon l'une des revendications 20 ou 21,
**caractérisé en ce que**
la surface de sol (62), plane, est de forme circulaire ou ovale.

23. Simulateur de conduite selon l'une des revendications 20 ou 22,
**caractérisé en ce que**
le bâtiment du simulateur présente quant à l'extension de sa surface de roulement, une dimension significativement supérieure à celle de l'unité de support dans au moins une direction.

24. Simulateur de conduite selon l'une des revendications 20 à 23,
**caractérisé par**
une installation de communication (24) entre le bâtiment du simulateur et l'unité de support (10).

25. Simulateur de conduite selon l'une des revendications 20 à 24,
**caractérisé en ce que**
le bâtiment du simulateur comporte un plafond ou une coupole (60) d'où est issu un câble de liaison (24) relié à l'unité de support (10) et assurant la transmission, les communications et/ou l'alimentation en énergie.
